# EUROPEAN PATENT APPLICATION

(11) **EP 2 813 554 A2**
(43) Date of publication of application: **17.12.2014**
(21) Application number: 14001668.4
(22) Date of filing: 12.05.2014
(51) Int. Cl.: C09D 175/08, B05D 5/08, C09D 5/00, C09D 7/12, C08K 3/00

(54) **A mixture/composition for forming non-skid surface, a method for preparing and applying the mixture and the products that this composition is applied on**

(30) Priority: 13.06.2013 TR 201307156
(71) Applicant: ECZACIBASI YAPI GERECLERI SANAYI VE TICARET ANONIM SIRKETI, 34394 Istanbul (TR)
(72) Inventor: Tunali, Ayse, 11300 Bozuyuk-Bilecik (TR); Tamsü Selli, Neslihan, 11300 Bozuyuk-Bilecik (TR); Turan, Dilek, 11300 Bozuyuk-Bilecik (TR)
(74) Representative: Ligi, Stefano

(57) **Abstract**

The present invention relates to a coating composition/mixture which can also be applicable for synthetic wet surfaces such as acrylic and which prevents sliding on the surfaces, to the method for preparing and applying the mixture on the surfaces, and to the product and surfaces on which the mixture according to the present invention is applied.

The mixture/composition developed within the present invention is a two-compound composition comprising polyol system and isocyanate, and it can be applied to any surface without requiring any pre-process on the surface.

## Description

### Subject of the Invention

The present invention relates to a coating composition/mixture which can also be applicable for synthetic wet surfaces such as acrylic and which prevents sliding on the surfaces, to the method for preparing and applying the mixture on the surfaces, and to the product and surfaces on which the mixture according to the present invention is applied.

### State of the Art

Because of the wet surfaces such as bathroom floor, bath-tub, shower tray surfaces at homes and the pool edges in outdoor places which are sliding, the users may fall down by sliding on these surfaces, and therefore injuries or accidents may happen. The sliding surfaces pose a danger especially for the olds and the kids. In the current situation, in order to make the surfaces assume non-skid characteristic, many different compositions have been developed and many different applications have been conducted on the surfaces. An example for these applications is a non-skid floor type described in utility model numbered 2008/09702. In the model according to the application, camber-shaped circular ridges are formed on the wet floor surface, and therefore the contact of the feet with the wet surface is prevented. However, such kind of an application can only be conducted during the production, and this is a solution that can be achieved only by purchasing a product with such a characteristic. The currently used product is not a solution that can be applied so as to prevent sliding on the surface. When considered in terms of aesthetics, the product view may change when ridges are formed on its surface, and the consumer may assess this case as degradation in the visual quality.

Another application providing non-skid characteristic to the surfaces is to apply a chemical mixture as a layer onto the product surface without creating any visual difference as mentioned. The said mixtures are applied during the production step of the product and the products are put on market only after its surface is made non-skid, moreover the mixtures can be purchased in certain amounts by the consumers and applied on the current products. The said chemical mixtures may comprise different compounds or the way that they are applied on the product may differ. Therefore, so far it has been known that the chemical mixtures prepared for this purpose and their method of application have both advantages and disadvantages.

The document numbered US2793136 discloses an application of a layer on the surface, wherein the layer is obtained by spreading hard resin material into liquid plasticizer. When the plasticizer material is heated, the resin pieces should be able to partially dissolve or gelate. The resin pieces should be copolymer made of a combination of preferably vinyl chlorine and vinyl acetate, polyvinyl chlorine, polymethyl methacrylate, copolymer made of a combination of vinyl chlorine and vinylidene chlorine; the plasticizer should be an ester such as dioctyl-phthalate. As the coating composition does not include a cure chemical which will enable the plasticizer to be cross-linked, that anti-slip surface is not that lasting.

The patent numbered GB2156672 describes a coating composition which provides hard coating in sanitaryware products. The composition comprises a polymer which is preferably polymethyl methacrylate, filling material, particulate material and a kind of cure chemical which is preferably benzoyl peroxide. As glass beads are used as the particulate material and as the mixture includes acrylate, the surface is polar. Therefore the water remains between the coated glass beads, which causes a problem in terms of preventing surface-sliding. When the water remains between the glass beads, some bacteria may be generated, which brings about a negative consequence in terms of health.

In the current state, similar chemical mixtures are applied as coating on the sanitary ware products, which are taken as a subject matter in many patent applications. The patent applications numbered WO8800018, DE3320929, and US4363145 are the examples for such coatings. The patent application numbered WO8800018 discloses a coating composition including elastomer. This coating, where elastomeric polymer is polyester polymer, improves the friction characteristics of the surface. The patent numbered DE3320929 describes the method for coating ceramic sanitary ware with a synthetic material including rubber. However, with this method, the coating becomes rough. Moreover, as the coating composition does not include particulate material in this method, the anti-slip surface is not good enough. The US Patent numbered 4363145 discloses the method of coating to be applied on the enamelled surface. The enamel layer including polyurethane, sand including silicon dioxide and the enamel layer including again polyurethane are applied successively. The disadvantage of this method is that the sand including silicon dioxide has a small-particle size. The sections, on which the sand is located is sharp, which causes an unpleasant touch.

Another mixture which is examined in order to eliminate the problems in the said patents is the subject matter of the patent numbered US 6197377 B1. The composition includes a coating mixture, particulate material having synthetic granules and a cure chemical. In the document, polyurethane resin and curing agent are used as diisocyanate. However, as the synthetic granules that have been used to create a soft touch are not natural, they pose a disadvantage. Moreover, the composition requires a pre-preparation period before the application. The need to clean the surface with a different chemical before applying the anti-slip material of the invention in order to provide a better adhesion causes both an additional cost and loss of time.

Within the present invention, it is aimed to develop a composition that can be applied on the surfaces which provides the synthetic surfaces such as acrylic to assume a non-skid characteristic and which does not require a chemical pre-process. Therefore, it becomes advantageous in terms of cost and time as the product is either purchased after the composition is applied or the mixture is purchased by the user and applied. In the state of the art, although the known applications provides good results on ceramic, tile, porcelain, marble surfaces, etc.; not good results are obtained when it is applied on synthetic surfaces such as acrylic. With the present invention, a very good finding about anti-slip according to DIN51097 standard is achieved. The other advantage of the invention is that instead of synthetic granule in the patent numbered US 6197377 B1, natural inorganic granules are used. While it is difficult to obtain the synthetic granules in desired sizes, there is the advantage to change the inorganic granules in desired sizes. As the sand used in the patent numbered US 4363145 forms sharp sections, an unpleasant touch is created, in the mixture according to the present invention, inorganic granules of thin granule sizes are used, and the disturbing touch in the mixture according to the state of the art is eliminated.

### Object of the Invention

The object of the present invention is to develop a composition which can also be applicable for synthetic surfaces such as acrylic and which makes the surface assume a non-skid characteristic.

Another object of the present invention is to develop a composition which can be applied without requiring any chemical pre-process on the surface.

A further object of the present invention is to develop a composition which provides a soft touch on the surface that it is applied, wherein natural inorganic granules can be used instead of synthetic granules.

### Description of the Figures

**Figure 1**: The view of the surface before the composition according to the present invention has been applied.
**Figure 2****:** The view of the surface after the composition has been applied.

### Description of the References:

1: The surface on which anti-slip composition is not applied.
2: The surface on which anti-slip composition is applied.

### Description of the Invention

The present invention relates to a coating composition/mixture which can also be applicable for synthetic wet surfaces such as acrylic and which prevents sliding on the surfaces, to the method for preparing and applying the mixture on the surfaces, and to the product and surfaces on which the mixture according to the present invention is applied.

Within the present invention, a two-compound polyurethane coating system is formed for the anti-slip application preventing the surfaces from being sliding. The first compound in the coating system developed within the present invention is the polyol system; and the second compound is isocyanate which is a cure compound. For the polyol system, preferably Bayer's products with the trademarks DESMOPHEN^{®}1200, DESMOPHEN^{®}1300 BA DESMOPHEN^{®}650 MPA-X, DESMOPHEN^{®}651 MPA-X, DESMOPHEN^{®}651 MPA-X can be used, however it cannot be limited with these products. The polyol system available in the composition according to the present invention is a mixture that the polyether- or polyester-based polyols and the catalyst added in appropriate amounts to them, UV stabilizer and the other chemicals compose. This mixture includes free hydroxyl (OH) within itself. Isocyanates, on the other hand, are the chemicals carrying free NCO in high amounts and going into exothermic reaction with this system when mixed with polyol system. The isocyanates are described and named depending on the percentage and number of the NCO that they carry.

The resulting product obtained after the polyol system and isocyanate are mixed in certain amounts and under certain temperature and go into exothermic reaction is called polyurethane. The reaction roughly takes place as in the following:

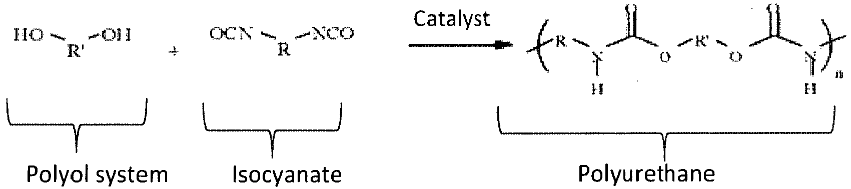

In the reaction, a link is created between the OH groups and NCOs inside the two compounds, and a very different structure comes about. While the hydrogen links are being broken or re-formed, the energy absorbed by polymer decreases the possibility for the covalent bonds of the polymer to be broken with a one-way reaction or in a way that it will cause deformation. These characteristics of polyurethanes are the reasons why they show high resistance against strong solvents.

The OH and NCO percentages of the composition compounds provide the resulting product to be hard, semi-hard or flexible. If the number of OH in polyol is 300 or higher, the polyurethane coating becomes hard; if it is between 100-300 it is semi-hard, and if it is 25-100, it becomes flexible.

The polyol system in the composition developed within the present invention comprises polyester or polyether polyol, acetate mixture solvent in which polyol is dissolved, inorganic granule in semi-hardness enabling the surface to be particulate, dispersion agents providing the granule to be dispersed homogeneously inside the solution, catalyst increasing bonding, stabilizer increasing UV resistance, and optionally added TiO₂ making the transparent composition opaque or optionally added pigments coloring the solution. The second compound, on the other hand, is HDI (Hexamethylene Diisocyanate) biuret-polyisocyanate which is a cure compound. In order to provide a better adherence, both polyol and polyisocyanate are selected as aliphatic compound instead of aromatic. Moreover, when aromatic isocyanate groups are used, and when the product is exposed to UV rays, yellowing problem may come about. By selecting aliphatic compounds, this problem is eliminated as well.

The polyol composing 25% weight of the system is a branched polyester including hydroxyl. It is also possible to use polyether-based polyol within the present invention. As the polyol does not include solvent, a solvent made of acetate is added into it, and it is mixed for almost 20 minutes or for a sufficient time until polyol is dissolved. The solvent composes approximately % 40 by weight of the system however to have a total amount of composition, solvent can be added in the amount of between 40 -50 % by weight to the composition. However before the acetate is added onto the polyol, UV stabilizer is added into acetate and mixed for 5 minutes or for a sufficient time in order to strengthen UV resistance and to make UV stabilizer dissolve homogeneously. Added UV stabilizer is in the amount of 0.5% by weight and it is the stabilizer which is available on the market with the trademark Tinuvin^{®} of BASF Company. More than one stabilizer can be added into the composition as the mixture. After the polyol is dissolved inside acetate, inorganic granules are added. Mentioned inorganic granules are selected among quartz, corundum and frit in different particle sizes. Inorganic granules will be in the amount of 10% by weight. By using different particle size distributions such as 63-300 µm, 100-400 µm and 100-500 µm, desired non-skid surface values in A, B and C classes can be obtained within the DIN51097 standard. In order for the inorganic granule mixture to be equally distributed to every part of the mixture, the solution is mixed for 30 minutes or for a sufficient time. Dispersion agents are added to the mixture composed within the present invention so that the inorganic granules can be dispersed homogeneously inside the solution. The used dispersion agents are preferably Efka^{®}5000 and Efka^{®}6000 of BASF Company, TEGOMER^{®} DA, AEROSIL^{®} 200 of Evonik Company, but they cannot be limited with these products. The composition developed within the present invention is transparent, and with some additions such as TiO₂, the solution can be made opaque optionally. Moreover, by adding different crystal forms/pigments selected among hematite, zircon, perowskite, rutile and similar pigments, different colors of surface can be obtained optionally.

Before the polyol mixture is mixed with polyisocyanate, a catalyst is added to polyol and mixed for 4 hours in order to increase linking. The catalyst is added in the amount of 2% by weight of the total mixture weight. Because of its easy dispersion, low cost, being colorless and high catalyst performance, Dibutyl tin Dilaurat is preferred as a catalyst. Dibutyl tin Dilaurat provides the reaction to progress in urethane-generation direction without turning to allophonate form and/or trimerization. In other words, the resulting product when Dibutyl tin Dilaurat is used as catalyst is only urethane. As the final process, polyisocyanate is added into polyol mixture and mixed for 2-3 minutes and the solution developed within the present invention is made ready. Added polyisocyanate is in the amount of 15% by weight. HDI (Hexamethylene Diisocyanate) biuret-polyisocyanate is used as polyisocyanate. All the processes are conducted under room temperature.

In order to apply the composition developed within the present invention, the surface on which the solution will be applied is going to be wiped first with a hard sponge and later on with a soft cloth. The anti-slip mixture preventing the surfaces from being slippery is applied on the desired surface by means of a roll. Even though the surface which the composition developed is applied becomes dry after 3 hours, it is suggested that the surface that is processed be used 12 hours later. It is not necessary to apply any chemical pre-process on the surface which will be coated with the composition of the invention, different than the compositions used within the state of the art.

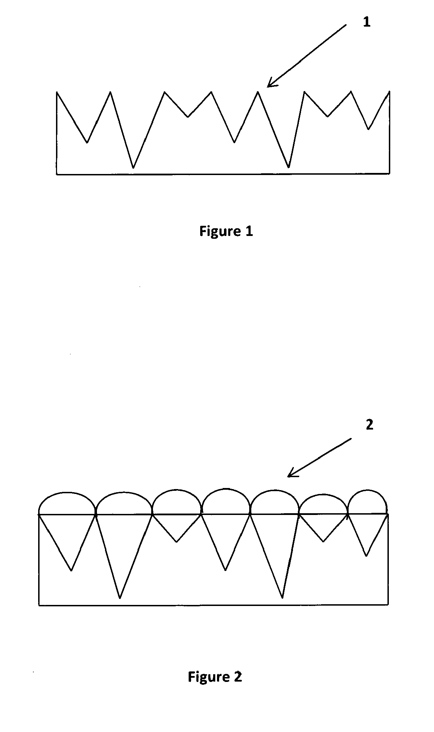

As is shown in Figure 1, there are some pores on all surfaces (1), even if they are very small, which causes the surface (1) to stay more as wet and to slide. After the surface is coated with the composition developed within the present invention, which prevents the surfaces from sliding (anti-slip), these pores are filled in, and the surface (2) is made to assume the view in Figure 2. Therefore the surface is prevented from sliding. The composition developed within this invention can be applied by users themselves and also products on which the composition has been applied are offered to users. The composition according to the present invention can be applied on many products as well as to the products whose surface can be acrylic, ceramic, porcelain, marble and faience. The products whose surfaces are coated with the coating composition of the present invention are also under the scope of the protection of the present invention. Bathroom surfaces, shower tray, bathtub, pool sides are accepted within the examples of the products whose surfaces are coated with the composition mentioned in the present invention. The pores shown in figure (1) before the surfaces are coated with the composition are filled after the composition is applied onto the surface, and therefore sliding is prevented.

## Claims

1. A mixture/composition comprising a coating compound and cure compound and prevent a surface from sliding **wherein** the coating compound is a polyol system and the cure compound is an isocyanate and the polyol system comprises the following ingredients;
• polyether- or polyester-based polyol,
• acetate as solvent, including UV stabilizer increasing the UV resistance, in which the polyol is dissolved,
• inorganic granule in semi-hardness providing the surface to be particulate,
• catalyst increasing linking.

2. The composition according to Claim 1, **characterized in that** the isocyanate used as the cure compound is HDI (Hexamethylene Diisocyanate) biuret-polyisocyanate.

3. The composition according to Claim 1, **characterized in that** the catalyst used in the polyol system is Dibutyl tin Dilaurat.

4. The composition according to Claim 1, **characterized in that** the polyol used in the polyol system is polyester based polyol which is a branched polyester including hydroxyl.

5. The composition according to Claim 1, **characterized in that** the inorganic granule used in the mixture is selected among quartz, corundum and frit, and according to DIN 51097 standard, in order to obtain A, B, and C levels of non-skidding, used inorganic granules can have different particle size distributions such as 63-100 µm, 100-400 µm and 100-500 µm.

6. The composition according to Claim 1, **characterized in that** said polyol system optionally further comprises additional additives such as TiO₂ which makes the composition opaque or pigments selected among hematite, zircon, perowskite, rutile and similar pigments which are in different crystal forms in order to color the transparent composition.

7. The composition according to Claim 1, **characterized in that** said polyol system further comprises dispersion agents providing the inorganic granules to be homogeneously dissolved inside the solution.

8. The composition according to any one of the preceding claims, **wherein**
• said polyether- or polyester-based polyol is in the amount of % 25 by weight,
• said acetate is in the amount of % 40-50 by weight,
• said UV stabilizer is in the amount of % 0,5 by weight,
• said inorganic granule is in the amount of % 10 by weight,
• said catalyst is in the amount of % 2 by weight and
• said isocyanate is in the amount of % 15 by weight.

9. A method for preparing the composition mentioned in the preceding claims, **characterized in comprising** the following process steps:
• adding UV stabilizer into the acetate solvent to be used in the mixture, and mixing thereof for 5 minutes or for a sufficient time so that the UV stabilizer can dissolve homogeneously,
• adding the prepared acetate solvent into polyester polyol and mixing thereof for almost 20 minutes or for a sufficient time until the polyol dissolves,
• adding inorganic granules into the mixture after the polyol dissolves,
• adding dispersion agents in order to provide the inorganic granules to be dissolved homogenously inside the solvent,
• mixing the solution for almost 30 minutes or for a sufficient time in order to provide the inorganic granule to be dispersed equally to every part of the mixture,
• adding catalyst into the polyol mixture in order to increase linking before being mixed with isocyanate, and mixing thereof for around 4 hours,
• adding isocyanate into the polyol mixture, and mixing thereof for 2-3 minutes.

10. The method according to Claim 9, **characterized in that** the catalyst added into polyol mixture is Dibutyl tin Dilaurate, and the isocyanate is HDI (Hexamethylene Diisocyanate) biuret-polyisocyanate.

11. The method according to Claim 9, **characterized in that** before adding isocyanate into the prepared mixture, optionally some pigments selected among hematite, zircon, perowskite, rutile are added which will color the composition, or some substances such as TiO₂ are added which will make the mixture opaque.

12. The method according to Claim 9, **characterized in that** the used inorganic granules are selected among quartz, corundum and frit having different particle size distributions such as 63-100 µm, 100-400 µm and 100-500.

13. The method according to Claim 9, **wherein**
• added amount of UV stabilizer is in the amount of % 0.5 by weight
• added amount of inorganic granules is in the amount of % 10 by weight
• added amount of catalyst is in the amount of % 2 by weight
• added amount of isocyanate is in the amount of % 15 by weight
• added amount of polyether- or polyester-based polyol is in the amount of % 25 by weight,
• added amount of acetate is in the amount of % 40-50 by weight,

14. The method according to Claim 9, **characterized in that** all the processes are conducted under room temperature.

15. A method for applying the composition mentioned in claim 1, 2, 3, 4, 5, 6, 7 and 8 on a surface, **characterized in comprising** the following steps of:
• wiping the surface first with a hard sponge and later on with a soft cloth
• applying the mixture to the surface with the help of a roll after wiping the surface

16. The method according to claim 14, **characterized in that** the surface on which the composition is applied is a surface selected among acrylic, ceramic, porcelain, marble and faience and the composition is applied on the surface without applying any chemical pre-process to the surface.

17. Product/surface coated with the composition according to any one of the claims 1-8.
